# EUROPÄISCHE PATENTSCHRIFT

(11) **EP 0 320 772 B1**
(45) Veröffentlichungstag und Bekanntmachung des Hinweises auf die Patenterteilung: **16.03.1994**
(21) Anmeldenummer: 88120438.2
(22) Anmeldetag: 07.12.1988
(51) Int. Cl.: H04L 12/54

(54) **Verfahren zur hybriden Paketvermittlung und Einrichtungen hierzu**
Method of hybrid packet switching and devices therefor
Procédé pour la commutation hybride de paquets et dispositifs à cet effet

(30) Priorität: 18.12.1987 DE 3742939
(43) Veröffentlichungstag der Anmeldung: 21.06.1989
(73) Patentinhaber: Alcatel SEL Aktiengesellschaft, D-70435 Stuttgart (DE)
(72) Erfinder: Weik, Hartmut, D-7000 Stuttgart 1 (DE)
(74) Vertreter: Brose, Gerhard, Dipl.-Ing.

(56) Entgegenhaltungen:
- EP-A- 0 208 604
- IEEE INTERNATIONAL CONFERENCE ON COMMUNICATIONS, 87, Bd. 2, Juni 1987, IEEE, NEW YORK, US, Seiten 769-773; J.COUDREUSE et al.: "PRELUDE : AN ASYNCHRONOUS TIME-DIVISION SWITCHED NETWORK"
- INTERNATIONAL TELETRAFFIC CONGRESS ITC-11, Bd. 5, 1985, NORTH-HOLLAND, AMSTERDAM, NL, Seiten 594-600; E.GOELDNER: "AN INTEGRATED CIRCUIT/PACKET SWITCHING LOCAL AREA NETWORK - PERFORMANCE ANALYSIS AND COMPARISON OF STRATEGIES"
- IEEE GLOBAL TELECOMMUNICATIONS CONFERENCE 87, Bd. 3, November 1987, IEEE, NEW YORK, US, Seiten 1856-1860; D.DIAS et al.: "DESIGN AND ANALYSIS OF A MULTISTAGE VOICE-DATA SWITCH"

## Beschreibung

Die Erfindung betrifft ein Verfahren zur Vermittlung von in Pakete einheitlicher Länge zerlegten Nachrichten nach dem Oberbegriff des Hauptanspruchs und Einrichtungen hierzu.

Ein solches Verfahren und Einrichtungen hierzu sind bekannt aus "Der Fernmelde=Ingenieur", 41. Jahrgang/Heft 9, September 1987, insbesondere Punkt 3.4 auf den Seiten 8 und 9.

Die zunehmende Vielfalt von Telekommunikationsdiensten erfordert ein sehr flexibles Vermittlungssystem. Hierfür werden insbesondere schnelle Paketvermittlungssysteme in Betracht gezogen; die anfallenden Daten werden dabei paketweise übermittelt. In solchen Systemen sind Verzögerungen, Laufzeitschwankungen und Paketverluste nicht grundsätzlich auszuschließen. Die einzelnen Telekommunikationsdienste sind hierfür aber unterschiedlich anfällig. Beispielsweise sind Datendienste, die den Verlust eines Pakets erkennen und dieses Paket neu anfordern können, gegen Paketverluste weit weniger anfällig als Sprach- oder Bewegtbilddienste, die die ankommende Information sofort auswerten müssen (elektroakustische bzw. elektrooptische Umsetzung) und bei denen Verluste und Laufzeitschwankungen (delay jitter) zu Störungen führen.

Es ist nun bekannt, bei einem Paketübermittlungssystem einheitlich lange Pakete zu verwenden, diese zu periodisch wiederkehrenden Rahmen zusammenzufassen, bevorzugt zu behandelnden Nachrichten feste Positionen innerhalb der Rahmen zuzuordnen und diese bevorzugt zu behandelnden Nachrichten wie bei Leitungsvermittlung üblich in synchroner Zeitvielfachtechnik zu vermitteln, während die übrigen Pakete wie bei Paketvermittlung üblich vermittelt werden.

Für die bevorzugt zu behandelnden Nachrichten ergibt sich damit ein synchrones Übertragungsverfahren, derzeit als STM (synchronous transfer mode) im Gespräch. Die einzelnen Pakete werden als STM-Zellen bezeichnet. Für die übrigen Nachrichten ergibt sich ein asynchrones Übertragungsverfahren, derzeit als ATM (asynchronous transfer mode) im Gespräch, wobei die einzelnen Pakete als ATM-Zellen bezeichnet werden. Im Zusammenhang mit dem synchronen Übertragungsverfahren werden auch Begriffe wie "Leitungsvermittlung", "CS" = "circuit switching˝ und "CS-Pakete" verwendet, im Zusammenhang mit dem asynchronen Übertragungsverfahren werden Begriffe wie "Paketvermittlung", "PS" = "packet switching", "PS-Pakete", "ATD" = "Asynchronous Time Division" und "fast packet switching" verwendet. Kombinationen werden als hybrid bezeichnet.

Ein Paket enthält aber zwangsläufig wesentlich mehr Bits als ein Zeitschlitz in herkömmlicher Zeitvielfachtechnik. Im Gespräch sind derzeit Rahmen mit etwa 70 Paketen mit je 40 Oktetten, d.h. mit etwa 40 X 70 X 8 Bit = 22 400 Bit. Bei herkömmlicher Zeitvielfachtechnik sind Rahmen mit 32 Zeitschlitzen zu je 16 Bit, d.h. mit 512 Bit üblich. Da bei Vermittlung in synchroner Zeitvielfachtechnik in jeder Zeitkoppelstufe pro Eingang jeweils ein kompletter Rahmen zwischengespeichert werden muß, erhöht sich der Speicherbedarf erheblich. Auch treten jeweils Verzögerungen in der Größenordnung eines Rahmens auf. Wenn, wie zu erwarten, die Rahmenwiederholfrequenz in beiden Fällen gleich ist (8 kHz), dann müssen die Speicher nicht nur wesentlich umfangreicher, sondern im selben Maße auch schneller sein. Eine Geschwindigkeitsreduzierung durch parallele statt serielle Verarbeitung ist allenfalls sehr begrenzt möglich.

Der Erfindung liegt die Aufgabe zugrunde, ein hybrides Paketvermittlungsverfahren der genannten Art so auszugestalten, daß zu seiner Durchführung der Bedarf an schnellen Speichern reduziert wird, und die dafür erforderlichen Einrichtungen anzugeben.

Diese Aufgabe wird gelöst durch ein Verfahren nach der Lehre des Anspruchs 1 und Einrichtungen (Vermittlungseinrichtung, Eingangs-Sortierer, Ausgangs-Sortierer) nach den Ansprüchen 7, 8 und 9.

Gemäß der Erfindung werden also innerhalb der Vermittlungsstelle sämtliche Pakete in untereinander gleich lange Paketteile zerlegt und auf Unterrahmen aufgeteilt. Vermittelt wird auf der Basis der Unterrahmen. Verzögerungen und Speicherplatzbedarf innerhalb der Koppeleinrichtung werden im Verhältnis Rahmen : Unterrahmen verringert. Die Geschwindigkeit innerhalb der Koppelanordnung bleibt erhalten. Zusätzlich ist allerdings für jede Eingangs- und jede Ausgangsleitung ein Sortierer erforderlich, der jeweils einen Rahmen zwischenspeichern muß. Da hier aber im Gegensatz zu einer Koppelstufe nicht mehrere Rahmen im selben Speicher gespeichert werden müssen, können hier langsamere Speicher als in den Koppelstufen verwendet werden. Bereits bei einer dreistufigen Koppelanordnung wird aber nicht nur die Anzahl der erforderlichen schnellen Speicher, sondern der Bedarf an Speichern insgesamt reduziert.

Der Grundgedanke der Erfindung liegt darin, daß sich durch die Aufteilung der Pakete in Paketteile effektiv kürzere "Pakete" ergeben, die auch einen entsprechend geringeren Speicheraufwand zur Folge haben. Da aber nur noch die ersten Paketteile Wegeinformationen enthalten, muß auf andere Weise die Zusammengehörigkeit und damit auch die gleichartige Behandlung gewährleistet werden. Dies erfolgt dadurch, daß die einzelnen Paketteile nicht, wie sonst für Pakete üblich, an zufälliger Stelle in den Datenstrom eingefügt werden, sondern dadurch, daß sie einander nach einem vorgegebenen Muster folgen, wobei STM-Zellen und ATM-Zellen vorzugsweise unterschiedlich behandelt werden. Damit sich die effektive Verkürzung der Pakete auswirken kann, dürfen zusammengehörige Paketteile nicht unmittelbar aufeinander folgen, sie müssen vielmehr mit Paketteilen anderer Pakete abwechseln.

Vorteilhafte Ausgestaltungen sind den Unteransprüchen zu entnehmen. Andere Ausgestaltungen desselben Grundgedankens sind der europäischen Patentanmeldung EP-A-0 320 714 "Einrichtungen zur Paketvermittlung" desselben Anmelders zu entnehmen.

Die Erfindung wird zwar mit Begriffen beschrieben, die in erster Linie auf räumlich konzentrierte Vermittlungseinrichtungen angewandt werden. Auch das folgende Ausführungsbeispiel stellt eine konzentrierte Vermittlungseinrichtung dar. Die vorliegende Erfindung ist aber gleichermaßen auch auf nicht konzentrierte Vermittlungseinrichtungen, beispielsweise Ringsysteme, anwendbar. Hierzu wird einerseits auf den eingangs erwähnten Artikel aus "Der Fernmelde=Ingenieur" hingewiesen, wo Bus- und Ringsysteme unter 4.1.2 den Koppelanordnungen unter 4 untergeordnet sind, und andererseits auf die Veröffentlichung EP-A2 0 125 744, "Closed loop telecommunication system", in der ein Ringsystem beschrieben wird, in welchem immer ein kompletter Rahmen mit einer Vielzahl von Paketen umläuft, wozu Schieberegister oder andere Speicher erforderlich sind.

Zu den ersten und bekanntesten Vermittlungseinrichtungen für schnelle Paketvermittlung gehört das Projekt PRELUDE des CNET (Centre National d'Etudes des Télécommunications) in Frankreich. Eine Beschreibung findet sich z.B. in IEEE International Conference on Communications '87, vol. 2, June 1987, IEEE New York US, Seiten 769 - 773; J. Coudreuse et al.: "PRELUDE: AN ASYNCHRONOUS TIME-DIVISION SWITCHED NETWORK". Bei dieser bekannten Vermittlungseinrichtung werden die ankommenden Pakete tatsächlich ebenfalls in eine Reihe von Paketteilen aufgeteilt, die dann anschließend zum Ausgang der Vermittlungsstelle vermittelt werden. Dabei erfolgt eingangsseitig eine Supermultiplexbildung; d.h., die Nachrichtenströme aller Eingänge werden zu einem einzigen Nachrichtenstrom zusammengefaßt. Dieser Supermultiplex-Nachrichtenstrom wird in einen Zwischenspeicher eingeschrieben, in anderer Reihenfolge wieder ausgelesen und durch Demultiplexen auf die verschiedenen Ausgänge verteilt. Um trotz Supermultiplexbildung die Übertragungsgeschwindigkeit nicht erhöhen zu müssen, werden die Paketteile eines Pakets nach Art einer Parallelverarbeitung (hier allerdings zeitlich gestaffelt) auf verschiedene Leitungen verteilt. Größere, mehrstufige Vermittlungsstellen können so kaum mehr realisiert werden.

Im folgenden wird die Erfindung anhand eines Ausführungsbeispiels unter Zuhilfenahme der beiligenden Zeichnungen weiter erläutert.
- Fig. 1: zeigt den erfindungsgemäßen Ablauf am Eingang einer Vermittlungsstelle bezüglich der STM-Zellen.
- Fig. 2: ergänzt Fig. 1 bezüglich der ATM-Zellen.
- Fig. 3: zeigt den Aufbau von STM- und ATM-Zellen.
- Fig. 4: zeigt den Aufbau einer erfindungsgemäßen Vermittlungseinrichtung.
- Fig. 5: zeigt das Blockschaltbild einer einzelnen Koppeleinrichtung.
- Fig. 6: zeigt das Blockschaltbild eines Eingangs-Sortierers.
- Fig. 7: zeigt das Blockschaltbild eines Ausgangs-Sortierers.
- Fig. 8: zeigt das Blockschaltbild einer Schreibsteuerung für den Eingangs-Sortierer nach Fig. 6.
- Fig. 9: zeigt das Blockschaltbild einer Lesesteuerung für den Eingangs-Sortierer nach Fig. 6.
- Fig.10: zeigt das Blockschaltbild eines asynchronen Koppelelements für die Koppeleinrichtung nach Fig. 5.
- Fig.11 bis Fig. 14: zeigen weitere Einzelheiten des asynchronen Koppelelements nach Fig. 10.

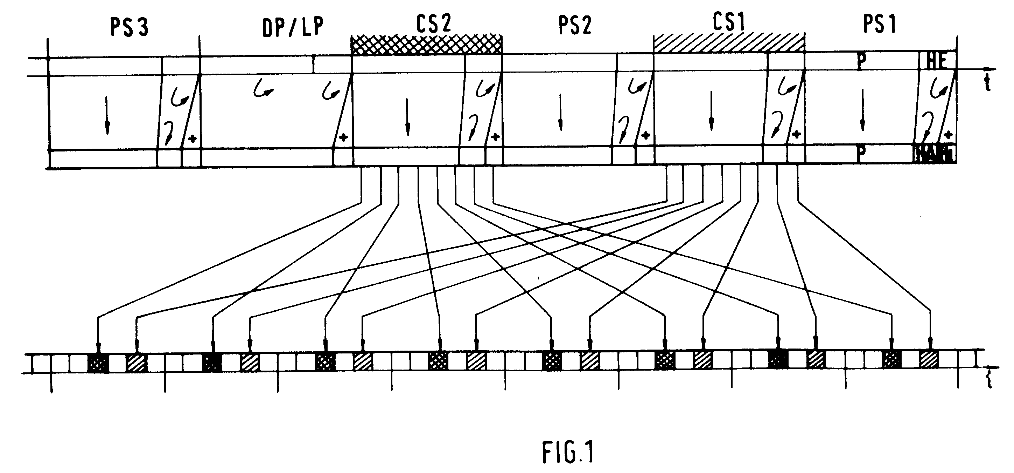

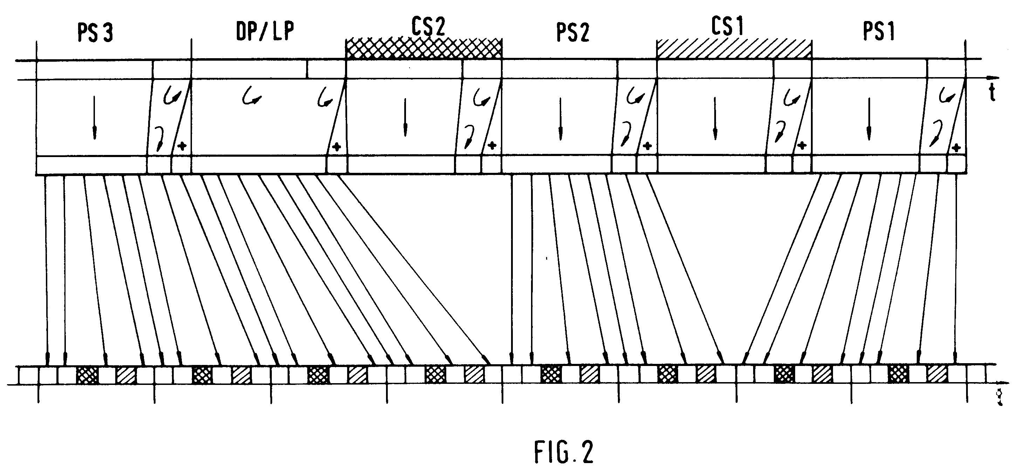

Anhand der Figuren 1 und 2 wird nun das Prinzip der Erfindung näher erklärt, wobei Fig. 1 die Behandlung derjenigen Pakete näher zeigt, die bevorzugt zu behandeln sind, während Fig. 2 die Behandlung der übrigen Pakete näher zeigt.

Es wird von einem Rahmen ausgegangen, der sechs Pakete zu je acht Oktetten (zu je 8 Bit) enthält. Im Beispiel sind an den Positionen 1, 3 und 6 Pakete, PS1, PS2 und PS3, die in paketvermittelnder Weise zu vermitteln sind. An den Positionen 2 und 4 sind Pakete, CS1 und CS2, die in leitungsvermittelnder Weise durchzuschalten sind. Position 5 enthält ein Steuerpaket DP oder ein Leerpaket LP.

Jedes Paket besteht aus einem Nachrichtenteil (payload) P und einer vorausgehenden Marke (header, label). Die Marke ist eine Information für die nächste Vermittlungsstelle, die ankommende Marke HE wird deshalb zunächst durch eine abgehende Marke HA ersetzt. Zusätzlich kommt eine interne Marke Hi hinzu, die der Unterscheidung der Paketarten dient und verbindungsindividuelle Angaben enthält.

Die ankommenden Pakete (erste Zeile in Fig. 1 und 2) werden nun mit den teils abgeänderten, HA, teils hinzukommenden Markenteilen, Hi, abgespeichert (zweite Zeile in Fig. 1 und 2). Anschließend wird in veränderter Reihenfolge ausgegeben (dritte Zeile in Fig. 1 und 2). Die Ausgabe erfolgt zeitlich um einen Rahmen versetzt, ist aber in der Darstellung nicht versetzt.

Innerhalb der Vermittlungsstelle (dritte Zeile) ist der Rahmen in 8 Unterrahmen mit je sechs Oktetten unterteilt. Die bevorzugt zu behandelnden Pakete CS1 und CS2 werden nun in synchroner Weise durchgeschaltet, sie werden deshalb als STM-Zellen bezeichnet. Jeder STM-Zelle wird innerhalb eines jeden Unterrahmens an jeweils derselben Position ein Oktett zugewiesen, so daß die im Rahmen an zweiter Position stehende STM-Zelle CS1 oktettweise auf die jeweils zweiten Positionen der Unterrahmen aufgeteilt wird. Entsprechend werden der STM-Zelle CS2 jeweils die vierten Positionen zugeordnet.

Die Zuordnung zwischen ganzem Paket im Rahmen und den Paketteilen in den Unterrahmen kann auch anders erfolgen, sie muß aber immer eindeutig sein. Beispielsweise kann es sinnvoll sein, während einer Verbindung die Position in den Unterrahmen beizubehalten, auch wenn die Position im Rahmen während der Verbindung nicht fest bleibt.

Sind die Unterrahmen mit den Oktetten der STM-Zellen belegt, wie anhand der Figur 1 dargestellt, so werden die Oktette der übrigen Pakete, wie anhand der Figur 2 dargestellt, in ihrer ursprünglichen Reihenfolge in diejenigen Positionen der Unterrahmen einsortiert, die nicht von Paketteilen (Oktetten) eingenommen sind, die zu STM-Zellen gehören. Die Durchschaltung dieser Pakete erfolgt asynchron, sie kommen von außen auch asynchron an. Sie werden deshalb auch ATM-Zellen benannt. Grundsätzlich könnten auch die ATM-Zellen jeweils während der Dauer eines Rahmens synchron bearbeitet werden. Der asynchronen Betriebsweise wird jedoch hier der Vorzug gegeben.

Leerpakete, LP, also Zeitintervalle im Rahmen, die keinen Nachrichteninhalt aufweisen, und Steuerinformationen, DP, werden wie ATM-Zellen behandelt, sie können aber innerhalb der Vermittlungsstelle ausgesondert werden oder hinzukommen.

Beim vorliegenden Ausführungsbeispiel wird die vor dem Umsortieren in einem Rahmen enthaltene Information derart umsortiert, daß sie nach dem Umsortieren wieder ingesamt in einem Rahmen enthalten ist. Dies muß aber nicht zwangsläufig so sein.

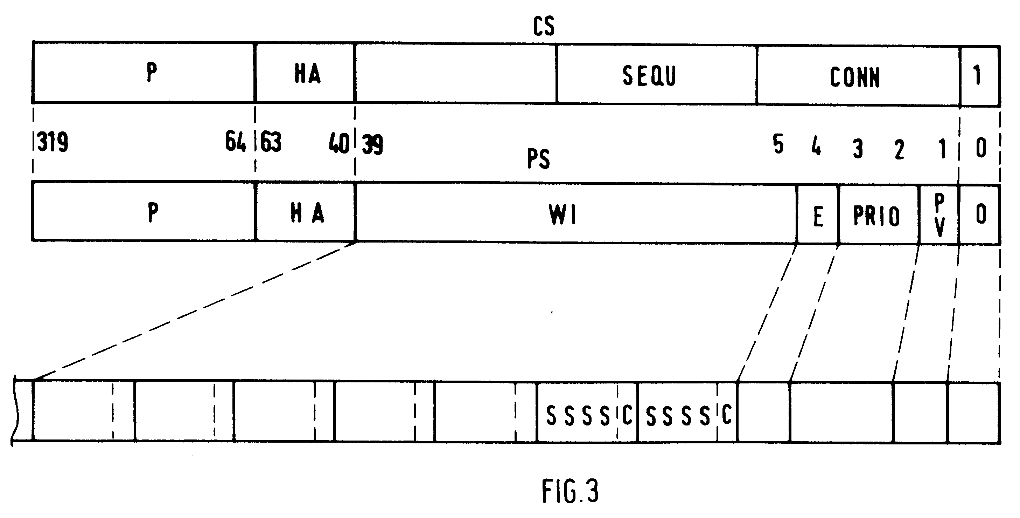

Anhand der Figur 3 wird nun zum besseren Verständnis der Aufbau einer STM-Zelle, CS, und einer ATM-Zelle, PS, näher dargelegt. Die Darstellung ist nicht maßstäblich. Beiden Paketarten gemeinsam ist ein dreiteiliger Aufbau, wobei die ersten fünf Oktette, d.h. die Bits 0 bis 39, die interne Marke Hi, die drei nächsten Oktette, d.h. die Bits 40 bis 63, die abgehende Marke HA und die restlichen 32 Oktette, d.h. die Bits 64 bis 319, den Nachrichtenteil P darstellen. Bit 0 dient der Unterscheidung von STM- und ATM-Zellen.

Bei STM-Zellen ist Bit 0 auf "1", es folgt eine Verbindungsnummer (5 Bits), CONN, und eine laufende Nummer (5 Bits), SEQU, innerhalb der Verbindung. Die restlichen Bits der internen Marke Hi sind bei STM-Zellen unbenutzt.

Bei ATM-Zellen ist Bit 0 auf "0", es folgen ein "packet-valid"-Bit PV, zwei Prioritätsbits PRIO, ein unbenutztes Bit E und ein Wegeinformationsteil WI. Wie die dritte Zeile in Figur 3 zeigt, enthält der Wegeinformationsteil WI für sieben aufeinanderfolgende Stufen je 5 Bit an Wegeinformation. Das jeweils erste Bit ist ein Steuerbit C, das bei Steuerpaketen diejenige Stufe markiert, für die das Paket bestimmt ist. Die vier jeweils folgenden Bits geben eine Ausgangsadresse SSSS an.

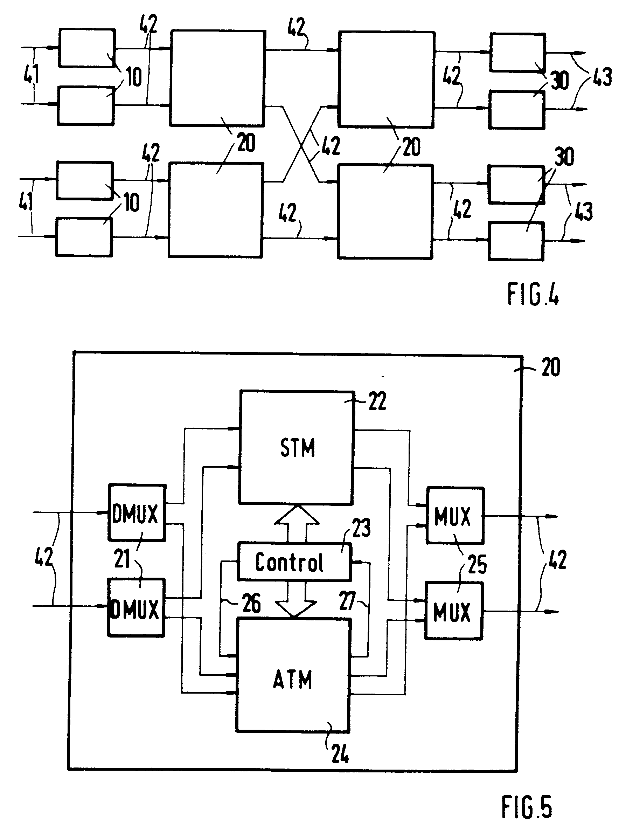

Figur 4 zeigt eine einfache erfindungsgemäße Vermittlungseinrichtung. Sie weist vier Koppeleinrichtungen 20 auf, die in zwei gleichen Stufen angeordnet sind und jeweils zwei Eingangsleitungen 42 und zwei Ausgangsleitungen 42 aufweisen. Die Koppeleinrichtungen 20 der ersten Stufe sind jeweils mit beiden Koppeleinrichtungen 20 der zweiten Stufe verbunden. Zwischen jede Eingangsleitung 41 dieser Vermittlungseinrichtung und die zugehörige Eingangsleitung 42 der Koppeleinrichtungen 20 der ersten Stufe ist ein Eingangs-Sortierer 10 eingefügt. Am Ausgang der Vermittlungseinrichtung sind entsprechend zwischen die Ausgangsleitungen 42 der Koppeleinrichtungen 20 der letzten, hier der zweiten Stufe, und die Ausgangsleitungen 43 der Vermittlungseinrichtung Ausgangs-Sortierer 30 eingefügt.

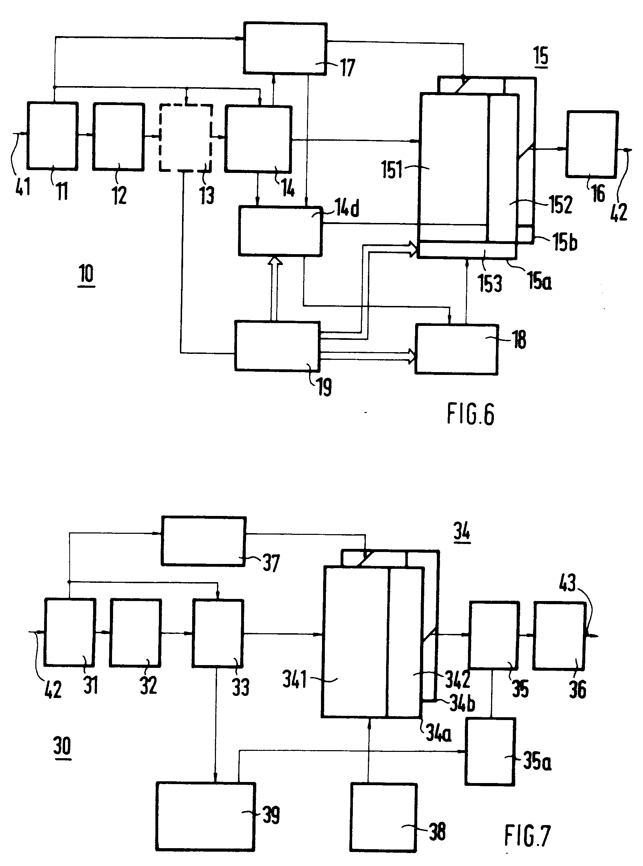

Figur 5 zeigt eine einzelne Koppeleinrichtung 20 mit zwei Eingangsleitungen 42, zwei Ausgangsleitungen 42, zwei Demultiplexern 21, einem synchronen Koppelelement 22, einem asynchronen Koppelelement 24, einem Steuerteil 23, zwei Multiplexern 25 und zwei Steuerpaketleitungen 26 und 27.

Jeder Eingangsleitung 42 ist ein Demultiplexer 21 zugeordnet. Das Beispiel zeigt zwei Eingangsleitungen und zwei Demultiplexer. Bevorzugt werden aber Koppeleinrichtungen mit 16 Ein- und Ausgängen, d.h. 16 Eingangsleitungen, 16 Demultiplexer, 16 Multiplexer und 16 Ausgangsleitungen.

Jeder Demultiplexer 21 synchronisiert zunächst den Eingangsdatenstrom, wandelt ihn oktettweise von seriell in parallel und leitet ihn dem synchronen Koppelelement 22 oder dem asynchronen Koppelelement 24 zu. Die Entscheidung hierfür wird anhand einer Tabelle getroffen, in der die synchron durchzuschaltenden Zeitschlitze markiert sind. Diese Tabelle kann entweder vom Steuerteil 23 aus auf dem laufenden gehalten werden oder jeweils durch Auswerten des ersten Unterrahmens eines jeden Rahmens neu gebildet werden.

Das synchrone Koppelelement 22 weist im beschriebenen Beispiel zwei Eingänge und zwei Ausgänge auf, bevorzugt werden 16 Ein- und Ausgänge. In herkömmlicher Zeitmultiplextechnik kann hier von jedem Eingangszeitschlitz eines jeden Eingangs zu jedem Ausgangszeitschlitz eines jeden Ausgangs vermittelt werden. Pro Eingang ist jeweils ein Unterrahmen zu speichern. Gesteuert wird das synchrone Koppelelement 22 durch das Steuerteil 23. Die Steuerinformationen hierfür laufen über das asynchrone Koppelelement 24. Der Aufsatz "SYSTEM 12 - Doppelport des Koppelnetzbausteins" von W. Frank et al in "Elektrisches Nachrichtenwesen", Band 59, Nummer 1/2, 1985, beschreibt ein solches synchrones Koppelelement, das allerdings für eine andere Übertragungsgeschwindigkeit und eine andere Anwendung realisiert wurde.

Das asynchrone Koppelelement 24 weist im Beispiel drei Eingänge und drei Ausgänge auf, bevorzugt werden 17 Ein- und Ausgänge. Je ein Eingang und ein Ausgang ist über die Steuerpaketleitungen 26 bzw. 27 mit dem Steuerteil 23 verbunden. Zur Realisierung kann jede einstufige Koppelanordnung für Paketvermittlung verwendet werden. Genügend Beispiele sind im eingangs erwähnten Zeitschriftenheft "Der Fernmelde=Ingenieur", sowie dessen Folgeheft, Heft 10, Oktober 1987, beschrieben. Zusätzlich müssen nur die Pakete aus den aufeinanderfolgend ankommenden Paketteilen aufgebaut und anschließend wieder zerlegt werden.

Die Multiplexer 25 fügen die vom asynchronen Koppelelement 24 kommenden Paketteile in die Lücken ein, die in den vom synchronen Koppelelement 22 kommenden Datenströmen enthalten sind. Gegebenenfalls werden Leerpakete eingefügt. Auch etwaige zusätzliche, der Synchronisation, Rahmenkennung oder Unterrahmenkennung dienende Informationen werden hier eingefügt. Anschließend wird wieder in einen seriellen Datenstrom gewandelt.

Auf allen Eingangs- und Ausgangsleitungen, 41, 42 und 43, werden sowohl ATM- als auch STM-Zellen gemeinsam übertragen. Sie werden in allen Einrichtungen, Eingangs- und Ausgangssortierer 10 und 30 und Koppeleinrichtungen 20, in unterschiedlicher Weise behandelt. In den Eingangs- und Ausgangssortierern 10 und 30 wird diese unterschiedliche Behandlung durch unterschiedliche Steuerung gewährleistet, während in den Koppeleinrichtungen 20 hierfür getrennte Zweige vorgesehen sind. Beides ist nicht unbedingt zwingend, bietet sich aber an, da in den Koppeleinrichtungen 20 wegen des dort viel größeren Durchsatzes ohnehin eine Aufteilung erfolgen muß.

Im folgenden werden einige dieser Einrichtungen noch näher beschrieben.

Anhand der Figur 6 wird nun der Eingangs-Sortierer 10 näher beschrieben. Er enthält eine Synchronisationseinrichtung 11, einen Serien-Parallel-Wandler 12, eine D-Kanal-Ausleselogik 13, eine Markenausleselogik 14, der ein Markenumwerter 14a zugeordnet ist, einen aus zwei gleichen Teilen 15a und 15b bestehenden Eingangsspeicher 15, einen Parallel-Serien-Wandler 16, eine Schreibsteuerung 17, eine Lesesteuerung 18 und ein Steuerteil 19. Der normale Informationsfluß läuft von der Synchronisationseinrichtung 11 am Eingang über den Serien-Parallel-Wandler 12, die D-Kanal-Ausleselogik 13, die Markenausleselogik 14, den Eingangsspeicher 15 und den Parallel-Serien-Wandler 16 zum Ausgang.

Die Synchronisationseinrichtung 11 führt eine Bit- und Rahmensynchronisation durch und synchronisiert damit den ganzen Eingangssortierer 10, insbesondere die D-Kanal-Ausleselogik 13, die Markenausleselogik 14, die Schreibsteuerung 17 und die Lesesteuerung 18.

Die D-Kanal-Ausleselogik 13 erkennt an der ankommenden Marke HE auftretende D-Kanal-Pakete, führt sie dem Steuerteil 19 zu und schickt stattdessen ein Leerpaket weiter (unveränderter, aber als ungültig gekennzeichneter Informationsteil).

Die Markenausleselogik 14 trennt die ankommenden Marken HE aller ankommenden Pakete ab und sendet sie dem Markenumwerter 14a zu.

Der Markenumwerter 14a ersetzt jede ankommende Marke HE anhand einer Tabelle durch die zugehörige abgehende Marke HA und die zugehörige interne Marke Hi und schreibt diese, durch die Schreibsteuerung 17 gesteuert, in den Eingangsspeicher 15 ein. Die Tabelle wird durch das Steuerteil 19 beschrieben.

Der Eingangsspeicher 15 besteht aus zwei gleichen Teilen 15a und 15b. Ein Teil wird von der Schreibsteuerung 17 beschrieben, während aus dem anderen Teil von der Lesesteuerung 18 ausgelesen wird. Beim nächsten Rahmen wird der jeweils andere Teil beschrieben bzw. ausgelesen.

Jeder Teil des Eingangsspeichers besteht aus drei Anteilen, einem Hauptteil 151, in das die Informationsteile der Pakete eingeschrieben werden, einem Markenteil 152, in das vom Markenumwerter 14a eingeschrieben wird und einem Steuerdatenteil 153, das vom Steuerteil 19 beschrieben wird und insbesondere Informationen zur Synchronisation, Rahmen- und Unterrahmenerkennung enthält.

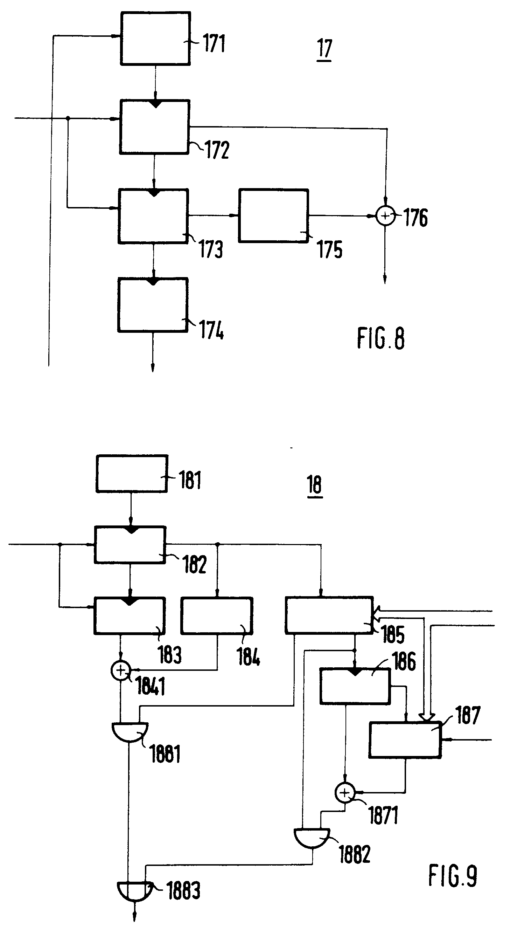

Die Schreibsteuerung 17 ist in Figur 8 dargestellt. Sie berechnet die Adressen der Speicherplätze, in die die ankommenden Pakete in den Eingangsspeicher 15 geschrieben werden. Sie unterscheidet nicht zwischen ATM- und STM-Zellen. Sie weist einen Taktgeber 171, einen Spaltenzähler 172, einen Zeilenzähler 173 und einen Rahmenzähler 174 auf.

Die Schreibsteuerung 17 steuert das Einschreiben in die Hauptteile 151 des Eingangsspeichers 15. Der Spaltenzähler 172 zählt die Oktette eines Pakets, der Zeilenzähler 173 die Pakete eines Rahmens. Beide werden zu Beginn eines Rahmens von der Synchronisationseinrichtung 11 zurückgesetzt. Der Zeilenzähler 173 wird durch den Überlauf des Spaltenzählers 172 getaktet. Der Taktgeber 171 hält an, wenn im Eingangsdatenstrom eine Marke auftritt. Dies wird von der Markenausleselogik 14 gesteuert. Der Inhalt des Zeilenzählers 173 wird in einem Multiplizierer 175 mit der Anzahl der Spalten (= Anzahl der Oktette eines Informationsteils) multipliziert, in einem Addierer 176 zum Inhalt des Spaltenzählers 172 addiert und ergibt dann die Einschreibadresse.

Das Umsortieren erfolgt beim Auslesen aus dem Eingangsspeicher 15 und wird durch die Lesesteuerung 18 gesteuert.

Die Lesesteuerung 18 ist in Figur 9 dargestellt. Sie berechnet die Adressen der Speicherplätze des Eingangsspeichers 15, aus denen die abgehenden Oktette gelesen werden. Hierbei unterscheidet sie zwischen ATM- und STM-Zellen. Die Lesesteuerung 18 weist einen Taktgeber 181, einen Zeilenzähler 182, einen Spaltenzähler 183, einen Multiplizierer 184, einen STM-Verbindungsspeicher 185, einen Paketteilezähler 186 und eine Paketspeichertabelle 187 auf.

Die Lesesteuerung 18 steuert das Auslesen aus dem Eingangsspeicher 15. Der Zeilenzähler 182 bestimmt die Zeile und der Spaltenzähler 183 die Spalte eines auszulesenden STM-Oktetts. Der Spaltenzähler 183 wird durch den Überlauf des Zeilenzählers 182 getaktet. Der Zeilenzähler 182 wird durch den Taktgeber 181 getaktet. Der Inhalt des Zeilenzählers 182 wird in einem Multiplizierer 184 mit der Anzahl der Spalten (im inneren Zellenformat) multipliziert und in einem Addierer 1841 zum Inhalt des Spaltenzählers 183 hinzuaddiert. Der Zeilenzähler 182 bestimmt in dem STM-Verbindungsspeicher 185, ob die entsprechende Zeile STM- oder ATM-Charakter besitzt. Ist der Wert der Tabelle 1, d.h. STM, so wird die Adresse über ein UND-Gatter 1881 und ein ODER-Gatter 1883 an das auszulesende Teil des Eingangsspeichers 15 angelegt. Ist der Wert der Tabelle 0, d.h. ATM, dann wird mit einem Impuls der Paketteilezähler 186 getaktet. Der Überlauf des Paketteilezählers 186 bewirkt, daß in der Paketspeichertabelle 187 die nächste Paketspeicheradresse eingestellt wird. Aus der in der Paketspeichertabelle 187 enthaltenen Paketspeicheradresse und dem Inhalt des Paketteilezählers 186 wird mit einem Addierer 1871 eine Leseadresse erzeugt. Falls der Wert in der Tabelle des STM-Verbindungsspeichers 186 0 ist, d.h. ATM, so wird die Leseadresse über ein UND-Gatter 1882 und das ODER-Gatter 1883 ausgegeben.

Alle Zähler werden über eine Resetleitung von der Synchronisationseinrichtung 11 zurückgesetzt.

Die Paketspeichertabelle 187 wird vom Markenumwerter 14a, bei Internkommunikation vom Steuerteil 19 beschrieben.

Der STM-Verbindungsspeicher 185 wird jeweils beim Auf- bzw. beim Abbau einer Verbindung vom Steuerteil 19 beschrieben.

Die Ausgangs-Sortierer 30 sind ähnlich aufgebaut und funktionieren auch ähnlich wie die Eingangs-Sortierer 10. Ein solcher Ausgangs-Sortierer wird nun anhand der Figur 7 beschrieben.

Er weist eine Synchronisationseinrichtung 31, einen Serien-Parallel-Wandler 32, eine Steuerdatenausleselogik 33, einen aus zwei gleichen Teilen 34a und 34b bestehenden Ausgangsspeicher 34, eine D-Kanal-Einfügelogik 35 mit zugeordnetem D-Kanal-Paketspeicher 35a, einen Parallel-Serien-Wandler 36, eine Schreibsteuerung 37, eine Lesesteuerung 38 und ein Steuerteil 39 auf. Von innerhalb der Vermittlungsstelle oder vom Eingang kommende Steuerpakete werden durch die Steuerdatenausleselogik 33 abgetrennt und dem Steuerteil 39 zugeführt, an ihrer Stelle werden Leerpakete weitergeschickt. Die D-Kanal-Einfügelogik 35 fügt vom Steuerteil 39 kommende, im D-Kanal-Paketespeicher 35a zwischengespeicherte D-Kanal-Pakete anstelle von Leerpaketen in den Ausgangsdatenstrom ein. Die Umsortierung erfolgt durch die Schreibsteuerung 37, die Lesesteuerung 38 liest nur der Reihe nach aus. Die beiden Teile des Ausgangsspeichers 34 sind je in einen Hauptteil 341 und einen Markenteil 342 aufgeteilt, ein Steuerdatenteil ist hier nicht erforderlich. Der Hauptteil 341 enthält für jedes Paket Informationsteil und abgehende Marke, der Markenteil 342 enthält die interne Marke. Beim Auslesen wird der Markenteil 342 übersprungen.

Abschließend wird noch ein bevorzugtes Ausführungsbeispiel für ein asynchrones Koppelelement 24 beschrieben.

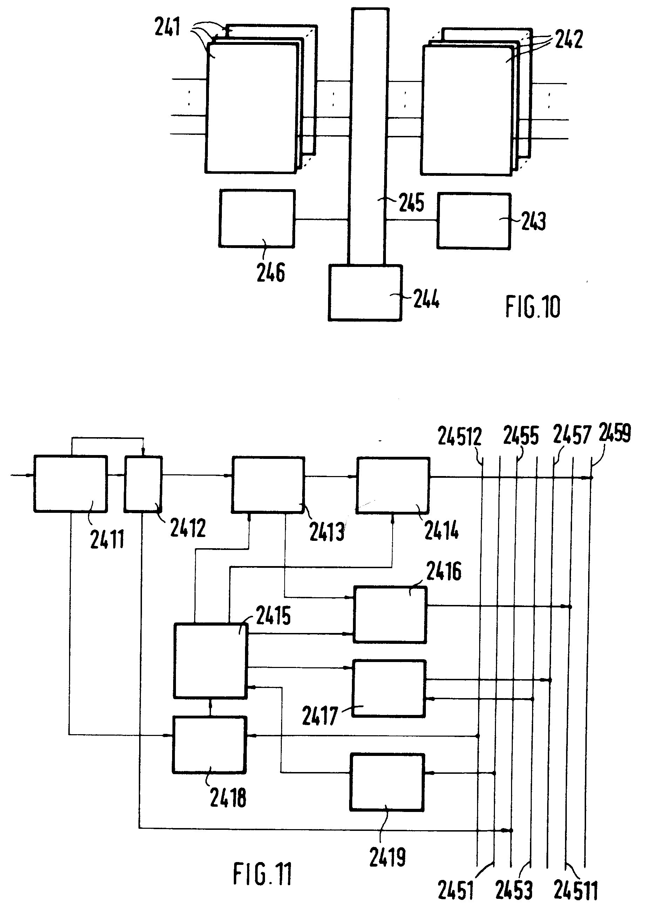

Das asynchrone Koppelelement 24 enthält, wie Figur 10 zeigt, pro Eingangsleitung eine Paketeingangseinheit 241 und pro Ausgangsleitung eine Paketausgangseinheit 242, eine Paketspeichervergabe 243, einen Paketspeicher 246, eine Buszuteilungseinheit 244 und einen Bus 245.

Die Paketeingangseinheiten 241 erkennen gültige ATM-Zellen und bekommen über den Bus 245 von der Paketspeichervergabe 243 einen Speicherplatz im Paketspeicher 246 zugeordnet. Die Paketausgangseinheiten 242 lesen die Pakete aus dem Paketspeicher 243 aus und senden sie zum zugehörigen Multiplexer 25.

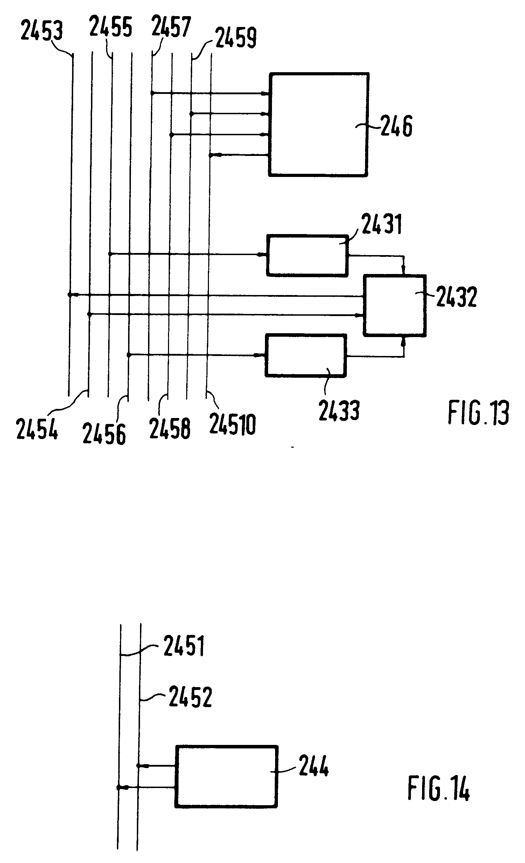

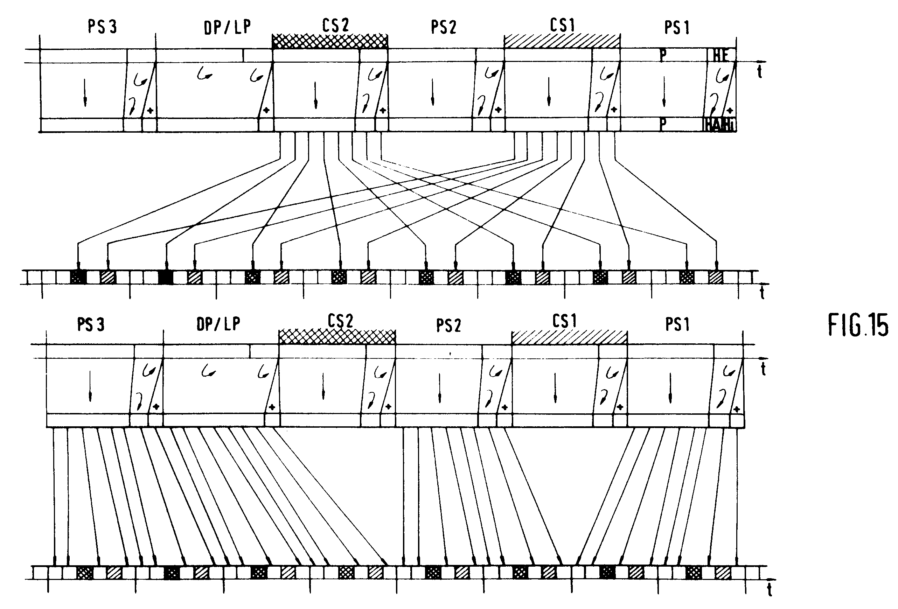

Die Buszuteilungseinheit 244 ist in Figur 14 dargestellt. Es ist dies im wesentlichen ein Zähler modulo N, wobei N die Zahl der Paketeingangseinheiten 241 und der Paketausgangseinheiten 242 ist. Der Zähler gibt seinen Zählwert auf einen Paketeingangssteuerbus 2451 und einen Paketausgangssteuerbus 2452, die physikalisch identisch sein können.

Die Paketspeichervergabe 243 und der Paketspeicher 246 sind in Figur 13 dargestellt. Die Paketspeichervergabe 243 besteht aus einer Stacklesesteuerung 2431, einem Paketstack 2432 und einer Stackschreibsteuerung 2433. In den Paketspeicher 246 können Daten über einen Schreibadressbus 2457 und einen Schreibdatenbus 2459 von den Paketeingangseinheiten 241 geschrieben werden, und über einen Leseadressbus 2458 und einen Lesedatenbus 24510 von den Paketausgangseinheiten 242 gelesen werden. Die Stacklesesteuerung 2431 erkennt die Anforderung eines Speicherplatzes auf einer Paketanzeigeleitung 2455 und bewirkt, daß der Paketstack 2432 eine freie Speicheradresse auf einen Speicheradressbus 2453 für die Paketeingangseinheit 241 ausgibt. Die Stackschreibsteuerung 2433 erkennt auf einer Rückgabeleitung 2456 die Rückgabe eines freien Speicherplatzes und bewirkt, daß der Paketstack 2432 die Adresse auf einem Speicherrückgabebus 2454 einsortiert.

Die Paketeingangseinheit 241 ist in Figur 11 dargestellt. Die Paketeingangseinheit 241 besteht aus einem Eingangsteil 2411, einem Paketfilter 2412, einer Labelvertauscheinheit 2413, einem Datenlatch 2414, einer Steuereinheit 2415, einem Portlatch 2416, einem Speicheradressenspeicher 2417, einem Zähler 2418 und einer Dekodierschaltung 2419. Der Eingangsteil 2411 erkennt die ankommenden Oktette und meldet dies an den Zähler 2418. Im ersten empfangenen Oktett erkennt der Paketfilter 2412 ein ankommendes Paket (am PV-Flag) und fordert von der Speichervergabe 243 über die Paketanzeigeleitung 2455 einen freien Speicherplatz an. Der Zähler 2418 meldet der Steuerung 2415 das Empfangen eines kompletten Labels. Die Steuereinheit 2415 veranlaßt daraufhin die Labelvertauscheinheit, das Label zyklisch zu vertauschen und das für diese Stufe gültige Label in das Portlatch 2416 zu schreiben. Die Daten werden in das Datenlatch 2414 eingeschrieben. Über den Paketeingangssteuerbus 2451 erkennt die Dekodierschaltung 2419 den Buszyklus und meldet dies an die Steuerung 2415 weiter. Diese veranlaßt, daß das Datenlatch 2414 die Daten auf den Schreibdatenbus 2459 gibt und daß der Speicheradressenspeicher 2417 die Speicheradresse auf den Schreibadressbus 2457 gibt. Bei der Übertragung des letzten Oktetts veranlaßt die Steuereinheit 2415 das Portlatch 2416, die Adresse des abgehenden Ports auf einen Portbus 24511 zu legen.

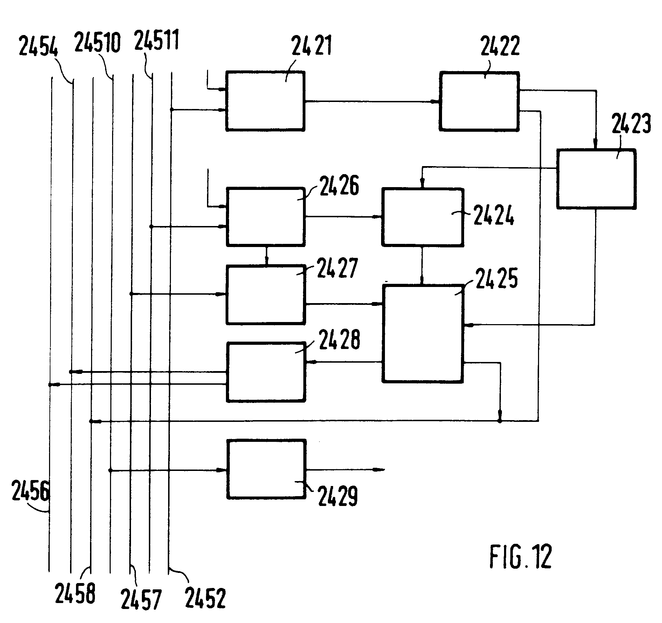

Eine Paketausgangseinheit 242 ist in Figur 12 gezeigt. Die Paketausgangseinheit 242 besteht aus einer Paketausgangszeitschlitzsteuerung 2421, einer Paketausgangsdekodierschaltung 2426, einem Paketteilezähler 2422, einem Paketezähler 2423, einer Einschreibelogik 2424, einer Paketwarteschlange 2425, einem Speicherbereichsadressspeicher 2427, einem Speicherbereichsrückgabespeicher 2428 und einem Ausgangsdatenlatch 2429. Die Paketausgangseinheit 242 hat zwei Aufgaben: die Paketwarteschlangenverwaltung und das Auslesen der Pakete aus dem Paketspeicher 246. Die Paketausgangsdekodierschaltung 2426 erkennt die eigene Adresse (d.h. die Adresse derjenigen Ausgangsleitung, für die diese Paketausgangseinheit zuständig ist) auf dem Portbus 24511. Die Paketausgangsdekodierschaltung 2426 veranlaßt daraufhin das Lesen der Paketanfangsadresse auf dem Speicheradressbus 2457 in den Speicherbereichsadressspeicher 2427. Die Einschreibelogik 2424 veranlaßt das Einschreiben der Paketanfangsadresse in die Paketwarteschlange 2425. Wenn ein Paket ausgelesen wurde, wird die Anfangsadresse des freigewordenen Speicherbereichs über den Speicherbereichsrückgabespeicher 2428 auf den Speicherrückgabebus 2454 ausgegeben und dies auf der Rückgabeleitung 2456 signalisiert, zeitlich gesteuert durch die Paketausgangszeitschlitzsteuerung 2421.

Das Auslesen der Pakete erfolgt zeitlich gesteuert über die Paketausgangszeitschlitzsteuerung 2421. Die Paketausgangszeitschlitzsteuerung 2421 taktet den Paketteilezähler 2422. Der Überlauf taktet den Paketezähler 2423. Der Paketteilezähler 2422 bildet mit der Anfangsadresse aus der Paketwarteschlange 2425 die Leseadresse, die auf den Leseadressbus 2458 gegeben wird. Die Paketdaten werden über den Lesedatenbus 24510 in das Ausgangsdatenlatch 2429 gelesen.

## Patentansprüche

1. Verfahren zur Vermittlung von in Pakete einheitlicher Länge zerlegten Nachrichten einer ersten Art und einer zweiten Art, insbesondere zur Vermittlung in einem aus mehreren Stufen bestehenden Koppelnetz, bei dem die Nachrichten der ersten Art derart in Pakete zerlegt sind, daß jeder Nachricht der ersten Art innerhalb eines periodischen Rahmens mindestens ein eigenes Zeitintervall zur Verfügung gestellt ist und bei dem die Nachrichten der ersten Art in synchroner Zeitvielfachtechnik vermittelt werden,
**dadurch gekennzeichnet,** daß vor der Vermittlung sämtliche Pakete (CS1, CS2, PS1, PS2, PS3, LP, DP) in eine Mehrzahl untereinander gleich langer Paketteile zerlegt werden, daß die Paketteile derart nach vorgegebenem Muster zeitlich um- und mit Paketteilen anderer Pakete zusammensortiert werden, daß der Rahmen in eine Mehrzahl von Unterrahmen aufgeteilt ist, daß die Anzahl der Paketteile innerhalb eines Unterrahmens gleich der Anzahl der Pakete innerhalb eines Rahmens ist und daß nach der Vermittlung die jeweils zu einem Paket gehörenden Paketteile wieder zusammengefaßt werden.

2. Verfahren nach Anspruch 1, dadurch gekennzeichnet, daß Paketteile, die zu einer Nachricht der ersten Art (CS1, CS2) gehören, innerhalb eines jeden Unterrahmens dieselbe Position einnehmen wie das ganze Paket im Rahmen (Fig.1).

3. Verfahren nach Anspruch 2, dadurch gekennzeichnet, daß Paketteile, die zu einer Nachricht der zweiten Art (PS1, PS2, PS3) gehören, in ihrer ursprünglichen Reihenfolge in diejenigen Positionen der Unterrahmen einsortiert werden, die nicht von Paketteilen eingenommen sind, die zu Nachrichten der ersten Art (CS1, CS2) gehören (Fig. 2).

4. Verfahren nach Anspruch 3, dadurch gekennzeichnet, daß Steuerinformationen (DP) und Zeitintervalle im Rahmen, die keinen Nachrichteninhalt aufweisen (LP), wie Pakete behandelt werden, die zu einer Nachricht der zweiten Art (PS1, PS2, PS3) gehören.

5. Verfahren nach einem der Ansprüche 1 bis 4, dadurch gekennzeichnet, daß in jeder Stufe des Koppelnetzes die zu Nachrichten der ersten Art gehörenden Paketteile in synchroner Zeitvielfachtechnik jeweils von einer Position eines Eingangs-Unterrahmens in eine Position eines Ausgangs-Unterrahmens umgesetzt werden.

6. Verfahren nach Anspruch 3 oder 4, dadurch gekennzeichnet, daß in jeder Stufe des Koppelnetzes die zu Nachrichten der ersten Art gehörenden Paketteile in synchroner Zeitvielfachtechnik jeweils von einer Position eines Eingangs-Unterrahmens in eine Position eines Ausgangs-Unterrahmens umgesetzt werden und daß die zu einem Paket einer Nachricht der zweiten Art gehörenden Paketteile in jeder Stufe des Koppelnetzes zunächst wieder zu einem Paket zusammengefaßt und anschließend wieder in Paketteile zerlegt in aufeinanderfolgenden Ausgangs-Unterrahmen in diejenigen Positionen einsortiert werden, die nicht von Paketteilen eingenommen sind, die zu Nachrichten der ersten Art gehören.

7. Vermittlungseinrichtung mit einem Koppelnetz zur Vermittlung von in Pakete einheitlicher Länge zerlegten Nachrichten einer ersten Art und einer zweiten Art, bei dem die Nachrichten der ersten Art derart in Pakete zerlegt sind, daß jeder Nachricht der ersten Art innerhalb eines periodischen Rahmens mindestens ein eigenes Zeitintervall zur Verfügung gestellt ist und bei dem die Nachrichten der ersten Art in synchroner Zeitvielfachtechnik vermittelt werden, insbesondere Vermittlungseinrichtung mit aus mehreren Stufen bestehendem Koppelnetz, **dadurch gekennzeichnet,** daß sie in jeder zum Koppelnetz führenden Leitung (41) einen Eingangs-Sortierer (10) und in jeder zu einem Ausgang führenden Leitung (43) einen Ausgangs-Sortierer (30) enthält, daß jeder Eingangs-Sortierer (10) einen Eingangsspeicher (15) und eine Schreib- und Lesesteuerung (17, 18) enthält, und daß die Schreib- und Lesesteuerung (17, 18) derart ausgestaltet ist, sämtliche Pakete (CS1, CS2, PS1, PS2, PS3, LP, DP) so in den Eingangsspeicher (15) einzuschreiben und wieder aus ihm auszulesen, daß die Pakete dabei nach vorgegebenem Muster in eine Mehrzahl untereinander gleich langer Paketteile zerlegt und die Paketteile derart zeitlich umsortiert werden, daß dabei der Rahmen in eine Mehrzahl von Unterrahmen aufgeteilt ist, und daß die Anzahl der Paketteile innerhalb eines Unterrahmens gleich der Anzahl der Pakete innerhalb eines Rahmens ist, und daß jeder Ausgangs-Sortierer (30) einen Ausgangsspeicher (34) und eine Schreib- und Lesesteuerung (37, 38) enthält und daß die Schreib- und Lesesteuerung (37, 38) derart ausgestaltet ist, so in den Ausgangsspeicher (34) einzuschreiben und wieder aus ihm auszulesen, daß dabei in Umkehrung des vorgegebenen Musters die Unterrahmen zu Rahmen und die zu einem Paket gehörenden Paketteile wieder zusammengefaßt werden.

8. Eingangs-Sortierer (10) für eine Vermittlungseinrichtung mit einem Koppelnetz zur Vermittlung von in Pakete einheitlicher Länge zerlegten Nachrichten einer ersten Art und einer zweiten Art, bei dem die Nachrichten der ersten Art derart in Pakete zerlegt sind, daß jeder Nachricht der ersten Art innerhalb eines periodischen Rahmens mindestens ein eigenes Zeitintervall zur Verfügung gestellt ist und bei dem die Nachrichten der ersten Art in synchroner Zeitvielfachtechnik vermittelt werden, insbesondere für eine zum Koppelnetz führende Leitung (41) einer Vermittlungseinrichtung mit aus mehreren Stufen bestehendem Koppelnetz, wobei der Eingangs-Sortierer (10) einen Eingangsspeicher (15) und eine Schreib- und Lesesteuerung (17, 18) enthält, die derart ausgestaltet ist, sämtliche Pakete (CS1, CS2, PS1, PS2, PS3, LP, DP) so in den Eingangsspeicher (15) einzuschreiben und wieder aus ihm auszulesen, daß die Pakete dabei nach vorgegebenem Muster in eine Mehrzahl untereinander gleich langer Paketteile zerlegt und die Paketteile derart zeitlich umsortiert werden, daß dabei der Rahmen in eine Mehrzahl von Unterrahmen aufgeteilt ist, und daß die Anzahl der Paketteile innerhalb eines Unterrahmens gleich der Anzahl der Pakete innerhalb eines Rahmens ist.

9. Ausgangs-Sortierer (30) für eine Vermittlungseinrichtung mit einem Koppelnetz zur Vermittlung von in Pakete einheitlicher Länge zerlegten Nachrichten einer ersten Art und einer Zweiten Art, bei dem die Nachrichten der ersten Art derart in Pakete zerlegt sind, daß jeder Nachricht der ersten Art innerhalb eines periodischen Rahmens mindestens ein eigenes Zeitintervall zur Verfügung gestellt ist und bei dem die Nachrichten der ersten Art in synchroner Zeitvielfachtechnik vermittelt werden, insbesondere für eine zu einem Ausgang führenden Leitung (43) einer Vermittlungseinrichtung mit aus mehreren Stufen bestehendem Koppelnetz, wobei bei der Vermittlung die Pakete nach vorgegebenem Muster in eine Mehrzahl untereinander gleich langer Paketteile zerlegt und die Paketteile derart zeitlich umsortiert werden, daß dabei der Rahmen in eine Mehrzahl von Unterrahmen aufgeteilt ist, und daß die Anzahl der Paketteile innerhalb eines Unterrahmens gleich der Anzahl der Pakete innerhalb eines Rahmens ist, wobei der Ausgangs-Sortierer (30) einen Ausgangsspeicher (34) und eine Schreib- und Lesesteuerung (37, 38) enthält, die derart ausgestaltet ist, so in den Ausgangsspeicher (34) einzuschreiben und wieder aus ihm auszulesen, daß dabei in Umkehrung des vorgegebenen Musters die Unterrahmen zu Rahmen und die zu einem Paket gehörenden Paketteile wieder zusammengefaßt werden.

## Claims

1. A method of switching messages of a first kind and a second kind divided into packets of uniform length, particularly in a multistage switching network, wherein the messages of the first kind are divided into packets such that within a periodic frame, at least one time interval is made available to each message of the first kind, and wherein the messages of the first kind are switched using synchronous time-division multiplexing,
**characterized in** that prior to the switching, all packets (CS1, CS2, PS1, PS2, PS3, LP, DP) are divided into a plurality of subpackets of equal length, that the subpackets are re-sorted in time, and sorted together in time with subpackets of other packets, according to a predetermined pattern, such that the frame is divided into a plurality of subframes, that the number of subpackets in a subframe is equal to the number of packets in a frame, and that after the switching, the subpackets belonging to a respective packet are recombined.

2. A method as claimed in claim 1, characterized in that the subpackets belonging to a message of the first kind (CS1, CS2) occupy the same position in each subframe as the entire packet in the frame (Fig. 1).

3. A method as claimed in claim 2, characterized in that the subpackets belonging to a message of the second kind (PS1, PS2, PS3) are sorted in their original order into those positions of the subframes which are not occupied by subpackets belonging to messages of the first kind (CS1, CS2) (Fig. 2).

4. A method as claimed in claim 3, characterized in that control information (DP) and time intervals in the frame which have no message content (LP) are treated like packets belonging to a message of the second kind (PS1, PS2, PS3).

5. A method as claimed in any one of claims 1 to 4, characterized in that in each stage of the switching network, each of the subpackets belonging to messages of the first kind is translated from a position of an input subframe to a position of an output subframe using synchronous time-division multiplexing.

6. A method as claimed in claim 3 or 4, characterized in that in each stage of the switching network, each of the subpackets belonging to messages of the first kind is translated from a position of an input subframe to a position of an output subframe using synchronous time-division multiplexing, and that in each stage of the switching network, the subpackets belonging to a packet of a message of the second kind are first recombined into a packet and then divided into subpackets again and sorted into those positions of successive output subframes which are not occupied by subpackets belonging to messages of the first kind.

7. A switching facility comprising a switching network for switching messages of a first kind and a second kind divided into packets of uniform length, wherein the messages of the first kind are divided into packets such that within a periodic frame, at least one time interval is made available to each message of the first kind, and wherein the messages of the first kind are switched using synchronous time-division multiplexing, particularly a switching facility with a multistage switching network,
**characterized in** that it contains an input sorter (10) in each line (41) running to the switching network and an output sorter (30) in each line (43) running to an output, that each input sorter (10) includes an input memory (15) and a write and read control (17, 18), that the write and read control (17, 18) is designed to write all packets (CS1, CS2, PS1, PS2, PS3, LP, DP) into the input memory (15) and to read them therefrom such that the packets are divided into a plurality of equally long subpackets according to a predetermined pattern and that the subpackets are re-sorted in time such that the frame is divided into a plurality of subframes, and that the number of subpackets within a subframe is equal to the number of packets within a frame, and that each output sorter (30) includes an output memory (34) and a write and read control (37, 38) and that the write and read control (37, 38) is designed to write into the output memory (34) and read therefrom such that, in a reversal of the predetermined pattern, the subframes are recombined into frames and the subpackets belonging to a packet are recombined.

8. An input sorter (10) for a switching facility with a switching network for switching messages of a first kind and a second kind divided into packets of uniform length, wherein the messages of the first kind are divided into packets such that within a periodic frame, at least one time interval is made available to each message of the first kind, and wherein the messages of the first kind are switched using synchronous time-division multiplexing, particularly for a line (41) running to the switching network in a switching facility with a multistage switching network, the input sorter (10) including an input memory (15) and a write and read control (17, 18) which is designed to write all packets (CS1, CS2, PS1, PS2, PS3, LP, DP) into the input memory (15) and to read them therefrom such that the packets are divided into a plurality of equally long subpackets according to a predetermined pattern and that the sub-packets are re-sorted in time such that the frame is divided into a plurality of subframes, and that the number of subpackets within a subframe is equal to the number of packets within a frame.

9. An output sorter (30) for a switching facility comprising a switching network for switching messages of a first kind and a second kind divided into packets of uniform length, wherein the messages of the first kind are divided into packets such that within a periodic frame, at least one time interval is made available to each message of the first kind, and wherein the messages of the first kind are switched using synchronous time-division multiplexing, particularly for a line (43) running to an output of a switching facility with a multistage switching network, wherein during the switching, the packets are divided into a plurality of equally long subpackets according to a predetermined pattern and the subpackets are re-sorted in time such that the frame is divided into a plurality of subframes and that the number of subpackets within a subframe is equal to the number of packets within a frame, the output sorter (30) including an output memory (34) and a write and read control (37, 38) which is designed to write into the output memory (34) and read therefrom such that, in a reversal of the predetermined pattern, the subframes are recombined into frames and the subpackets belonging to a packet are recombined.

## Revendications

1. Procédé de commutation d'informations d'un premier type et d'un second type, décomposées en paquets de longueur homogène, en particulier pour la commutation dans un réseau de connexion constitué de plusieurs étages, procédé dans lequel les informations du premier type sont décomposées en paquets, de façon telle qu'à chaque information du premier type, à l'intérieur d'une trame périodique, est mis à disposition au moins un créneau temporel propre, et dans lequel les informations du premier type sont commutées en technique synchrone de multiplexage par répartition dans le temps,
procédé caractérisé par le fait qu'avant la commutation, on décompose tous les paquets (CS1, CS2, PS1, PS2, PS3, LP, DP) en une pluralité de paquets partiels de longueur identique entre eux, que l'on déclasse-reclasse les paquets partiels selon un modèle prescrit et que l'on regroupe les paquets partiels d'autres paquets de façon telle que la trame est divisée en une pluralité de sous-trames, que le nombre des paquets partiels à l'intérieur d'une sous-trame est égal au nombre des paquets à l'intérieur d'une trame et qu'après la commutation on regroupe à nouveau les paquets partiels appartenant respectivement à un paquet.

2. Procédé selon la revendication 1, caractérisé par le fait que des paquets partiels qui appartiennent à une information du premier type (CS1, CS2) prennent, à l'intérieur de chacune des sous-trames, la même position que le paquet total dans la trame (figure 1).

3. Procédé selon la revendication 2, caractérisé par le fait que l'on interclasse des paquets partiels, appartenant à une information du second type (PS1, PS2, PS3), dans leur succession d'origine, aux positions des sous-trames qui ne sont pas occupées par des paquets partiels appartenant à des informations du premier type (CS2, CS2) (figure 2).

4. Procédé selon la revendication 3, caractérisé par le fait que des informations de commande (DP) et des intervalles de temps, dans la trame, qui ne présentent aucun contenu d'information (LP), sont traités comme des paquets qui appartiennent à une information du second type (PS1, PS2, PS3).

5. Procédé selon l'une des revendications 1 à 4, caractérisé par le fait qu'à chaque étage du réseau de connexion, on convertit les paquets partiels appartenant à des informations du premier type en technique synchrone de multiplexage par répartition dans le temps, pour les faire passer, chacun, d'une position d'une sous-trame d'entrée en une position d'une sous-trame de sortie.

6. Procédé selon la revendication 3 ou 4, caractérisé par le fait qu'à chaque étage du réseau de connexion, on convertit les paquets partiels appartenant à des informations du premier type en technique synchrone de multiplexage par répartition dans le temps, pour les faire passer, chacun, d'une position d'une sous-trame d'entrée en une position d'une sous-trame de sortie, et par le fait qu'à chaque étage du réseau de connexion on regroupe tout d'abord les paquets partiels appartenant à un paquet d'une information du second type pour en faire un paquet puis qu'on les interclasse, décomposés à nouveau en paquets partiels, dans les sous-trames de sortie successives, aux positions qui ne sont pas occupées par des paquets partiels appartenant à des informations du premier type.

7. Dispositif de commutation présentant un réseau de connexion pour la commutation d'informations d'un premier type et d'un second type décomposées en paquets de longueur homogène, procédé dans lequel les informations du premier type sont décomposées en paquets, de façon telle qu'à chaque information du premier type, à l'intérieur d'une trame périodique, est mis à disposition au moins un créneau temporel propre, et dans lequel les informations du premier type sont commutées en technique synchrone de multiplexage par répartition dans le temps, en particulier, dispositif de commutation présentant un réseau de connexion constitué de plusieurs étages,
dispositif caractérisé par le fait qu'il comporte, sur chaque ligne (41) conduisant au réseau de connexion, un organe de tri d'entrée (10) et, sur chaque ligne (43) conduisant à une sortie, un organe de tri de sortie (15), que chaque organe de tri d'entrée (10) contient une mémoire d'entrée (15) et un organe de commande d'écriture et de lecture (17, 18) et que l'organe de commande d'écriture et de lecture (17, 18) est réalisé de façon à écrire tous les paquets (CS1, CS2, PS1, PS2, PS3, LP, DP) dans la mémoire d'entrée (15), puis à les y lire, de façon telle que les paquets y sont décomposés, selon un modèle prescrit, en une pluralité de paquets partiels de longueur identique entre eux et que les paquets partiels sont, périodiquement, déclassés-reclassés de façon telle que la trame s'y divise en une pluralité de sous-trames et que le nombre des paquets partiels à l'intérieur d'une sous-trame est égal au nombre des paquets à l'intérieur d'une trame, et que chaque organe de tri de sortie (30) contient une mémoire de sortie (34) et un organe de commande d'écriture et de lecture (37, 38) et que l'organe de commande d'écriture et de lecture (37, 38) est réalisé de façon à écrire dans la mémoire de sortie (34) et à y lire à nouveau de façon telle que, en inversant le modèle prescrit, les sous-trames s'y regroupent en trames et que les paquets partiels appartenant à un paquet s'y regroupent à nouveau.

8. Organe de tri d'entrée (10) pour un dispositif de commutation présentant un réseau de connexion pour la commutation d'informations d'un premier type et d'un second type décomposées en paquets de longueur homogène, procédé dans lequel les informations du premier type sont décomposées en paquets, de façon telle qu'à chaque information du premier type, à l'intérieur d'une trame périodique, est mis à disposition au moins un créneau temporel propre, et dans lequel les informations du premier type sont commutées en technique synchrone de multiplexage par répartition dans le temps, en particulier pour une ligne (41), conduisant au réseau de connexion, d'un dispositif de commutation présentant un réseau de connexion constitué de plusieurs étages, étant précisé que l'organe de tri d'entrée (10) contient une mémoire d'entrée (15) et un organe de commande d'écriture et de lecture (17, 18) qui est réalisée de façon à écrire tous les paquets (CS1, CS2, PS1, PS2, PS3, LP, DP) dans la mémoire d'entrée (15), puis à les y lire, de façon telle que les paquets y sont décomposés, selon un modèle prescrit, en une pluralité de paquets partiels de longueur identique entre eux et que les paquets partiels sont, périodiquement, déclassés- reclassés de façon telle que la trame s'y divise en une pluralité de sous-trames et que le nombre des paquets partiels à l'intérieur d'une sous-trame est égal au nombre de paquets à l'intérieur d'une trame.

9. Organe de tri de sortie (30) pour un dispositif de commutation présentant un réseau de connexion pour la commutation d'informations d'un premier type et d'un second type décomposées en paquet de longueur homogène, procédé dans lequel les informations du premier type sont décomposées en paquets, de façon telle qu'à chaque information du premier type, à l'intérieur d'une trame périodique, est mis à disposition au moins un créneau temporel propre, et dans lequel les informations du premier type sont commutées en technique synchrone de multiplexage par répartition dans le temps, en particulier pour une ligne (43), conduisant à une sortie, d'un dispositif de commutation présentant un réseau de connexion constitué de plusieurs étages, étant précisé que, lors de la commutation, les paquets sont décomposés, selon un modèle prescrit, en une pluralité de paquets partiels de longueur identique entre eux et que les paquets partiels sont, périodiquement, déclassés-reclassés de façon telle que la trame s'y divise en une pluralité de sous-trames et que le nombre des paquets partiels à l'intérieur d'une sous-trame est égal au nombre des paquets à l'intérieur d'une trame, étant précisé que l'organe de tri de sortie (30) contient une mémoire de sortie (34) et un organe de commande d'écriture et de lecture (37, 38) qui est réalisé de façon à écrire dans la mémoire de sortie (34) et à y relire de façon telle qu'en inversant le modèle prescrit, les sous-trames s'y regroupent en trames et les paquets partiels appartenant à un paquet s'y regroupent à nouveau.
